# EUROPEAN PATENT APPLICATION

(11) **EP 4 707 146 A1**
(43) Date of publication of application: **11.03.2026**
(21) Application number: 25200413.0
(22) Date of filing: 05.09.2025
(51) Int. Cl.: B62K 23/02, B62L 3/02, B62M 25/08

(54) **INTEGRATED BICYCLE CONTROL WITH ACTUATOR SUITABLE FOR TWO GRIPS**

(30) Priority: 09.09.2024 IT 202400020059
(71) Applicant: Campagnolo S.r.l., 36100 Vicenza (VI) (IT)
(72) Inventor: Meggiolan, Mario, Creazzo (VI) (IT); Bove, Filippo, Padova (IT); Sgreva, Nicola, Arcugnano (VI) (IT)
(74) Representative: Montanari, Daniele

(57) **Abstract**

The integrated control comprises:
- a control body (11),
- a rear abutment zone (12) of the control body (11), intended to be in contact with the handlebar (M) when the control is mounted on the handlebar (M),
- a brake lever (18) pivoted to the control body (11) according to a pivot axis (X) transverse to the control body (11), spaced from the rear abutment zone (12),
- a switch (32) for sending an electrical signal to an electronic device,
- an actuator (20) placed on a flank (14) of the control body (11), between the rear abutment zone (12) and the transverse pivot axis (X), mounted movable angularly on the control body (11) so as to be able to transfer a pressure to the switch (32).

The actuator (20) comprises two distinct pressure zones (41, 42), oriented differently, so as to facilitate the actuation of the actuator (20) by a thumb of a cyclist when he/she grips the handlebar (M) in two different positions.

## Description

An integrated bicycle control is a control that comprises both a brake lever and at least one actuator to actuate the rear gearshift or front gearshift (also called a derailleur). In the following, sometimes the term "control" alone is used to indicate an integrated control; moreover, the term "gearshift" is intended to indicate indifferently a rear or front gearshift and the term "shifting" is intended to indicate indifferently a displacement of the chain on the sprockets of the rear gearshift or on the front gearshift.

In particular, this control is intended to be mounted on a bicycle handlebar of the curved end type, wherein each end comprises an upper section and a curved front section, facing downwards with respect to the upper section.

In the following - unless explicitly stated otherwise - the spatial references (such as high, low, longitudinal, transverse, lateral, front, rear, etc.) are to be understood as referring to the bicycle on which the control is mounted. In addition - always unless explicitly indicated otherwise - the spatial references "inner" and "outer" are used to indicate a transverse direction facing respectively towards the centre of the bicycle or in the opposite direction.

The actuators of an integrated control can be mounted on the brake lever or on the body of the integrated control; sometimes, an actuator mounted on the brake lever and an actuator on the body of the integrated control are provided.

When one of the actuators is on the body of the integrated control, it can consist of a shifting lever that rotates around an axis of rotation and that actuates mechanical or electronic elements to perform the shifting (EP1473220A1). It is also possible that the actuator consists of a button, which actuates electronic elements to perform the shifting (EP1524179A2, EP4008617A1).

The shape of the actuators is usually designed to be manoeuvred by a cyclist who grips the curved part of the bicycle handlebar or the control body itself. However, it has been verified that manoeuvrability is not always optimal. For example, a cyclist - especially if he/she has small hands - may have difficulty actuating the actuator when gripping the handlebar in certain positions; in these cases, the cyclist may be forced to momentarily leave the grip with his/her hand in order to perform the shifting. Obviously, this condition is not pleasing to the cyclist, especially in the case the bicycle is used during a competition.

Object of the present invention is to improve the manoeuvrability of an integrated control.

This object is achieved, in accordance with the present invention, by an integrated control according to claim 1; preferred features are indicated in the dependent claims.

In particular, the integrated control for a gearshift and a brake of a bicycle provided with a handlebar of the curved end type, wherein each end comprises an upper section and a curved front section, facing downwards with respect to the upper section, comprises:
- a control body,
- a rear abutment zone of the control body, intended to be in contact with the handlebar when the control is mounted on the handlebar,
- a brake lever pivoted to the control body according to a pivot axis transverse to the control body, spaced from the rear abutment zone,
- a switch for sending an electrical signal to an electronic device,
- an actuator placed on a flank of the control body, between the rear abutment zone and the transverse pivot axis, mounted movable angularly on the control body so as to be able to transfer a pressure to the switch;
and is characterized in that
the actuator comprises two distinct pressure zones, oriented differently, so as to facilitate the actuation of the actuator by a thumb of a cyclist who, during operation, reaches the actuator respectively from a first direction and from a second direction which are distinct from each other.

In this way, the two pressure zones can each be shaped to be optimal for a specific grip of the handlebar by the cyclist. When the electronic device is a gearshift, the cyclist is thus given the opportunity to perform a shifting without having to modify or leave the grip on the handlebar. This makes the shifting faster and safer, an advantage much appreciated by a cyclist, especially in difficult riding conditions where a firm grip of the handlebar is very important, such as cornering, downhill riding, in case of tight struggle with other cyclists, in case of low grip surface, etc.

Preferably, the first direction corresponds to a mainly vertical direction, when the cyclist grips the control body, and the second direction corresponds to a mainly horizontal direction, when the cyclist grips the handlebar on the curved front sections. By the expression "mainly vertical" is meant a direction having a much smaller horizontal component than the vertical component; correspondingly, by the expression "mainly horizontal" is meant a direction having a much smaller vertical component than the horizontal component.

Preferably, the actuator is pivoted to the control body according to a longitudinal pivot axis, located high with respect to the actuator, and wherein a first pressure zone is oriented mainly forward upwards, so as to facilitate the actuation of the actuator by a thumb of a cyclist when he/she grips the control body and therefore the thumb reaches the actuator from the first direction.

When the cyclist grips the control body - eventually partially touching the upper sections of the handlebar - (high grip), it is easier for him/her to actuate the actuator with a movement of the thumb in a backward downward direction and therefore the first pressure zone oriented forward upwards offers him/her the best actuation condition without having to alter the grip, simply by moving the thumb.

Preferably, the actuator is pivoted to the control body according to a longitudinal pivot axis, located high with respect to the actuator, and a second pressure zone is oriented mainly backward upwards, so as to facilitate the actuation of the actuator by a thumb of a cyclist when he/she grips the handlebar on the curved front sections and thus the thumb reaches the actuator from the second direction.

When the cyclist grips the handlebar on the curved front sections (low grip), it is easier for him/her to actuate the actuator with a movement of the thumb in a forward downward direction and therefore the second pressure zone oriented backward upward offers him/her the best actuation condition without having to alter the grip, simply by moving the thumb.

Preferably, the actuator is pivoted to the control body according to a longitudinal pivot axis, located high with respect to the actuator, a first pressure zone is oriented mainly forward upwards, so as to facilitate the actuation of the actuator by a cyclist's thumb when he/she grips the control body and thus the thumb reaches the actuator from the second direction, and a second pressure zone is oriented mainly backward upwards, so as to facilitate the actuation of the actuator by the cyclist's thumb when he/she grips the handlebar on the curved front sections and thus the thumb reaches the actuator from the second direction.

The presence of the two pressure zones therefore allows the cyclist to actuate the actuator with the movement alone of his/her thumb, whether at that time his/her handlebar grip is high or low.

Preferably, the actuator comprises a free face extending from an upper edge at the longitudinal pivot axis to a lower edge facing downwards, wherein the free face comprises a relief at a longitudinally intermediate zone of the lower edge, wherein the first pressure zone comprises a first flank of the relief and the second pressure zone comprises a second flank of the relief.

The conformation with the relief in the lower part of the outer face of the actuator, therefore in a position far from the longitudinal pivot axis, allows to obtain in a simple and effective way two pressure zones that both allow to obtain a rotation of the actuator around its pivot axis (therefore a displacement towards the inside of the control body of the central and lower part of the actuator) by means of a substantially vertical movement of the thumb, parallel to the flank of the integrated control.

Preferably, the free face of the actuator protrudes with respect to the inner flank of the control body at a front edge and at a front portion of an upper edge of the free face of the actuator between the front edge and the relief, and is coplanar with the inner flank of the control body at a rear edge and at a rear portion of the upper edge of the free face of the actuator between the rear edge and the relief.

In this way, the first pressure zone is protruding with respect to the flank of the control body. This allows the cyclist - by actuating the actuator when he/she grips the handlebar with a high grip - to easily identify the position of the actuator to the touch without having to check it visually and, therefore, shift the gaze from the road to the control: a simple vertical movement of the thumb downwards is enough.

Preferably, the first pressure zone also comprises a first front flat zone of the free face of the actuator, flush with the first flank of the relief, and the second pressure zone also comprises a second rear flat zone of the free face of the actuator, flush with the second flank of the relief.

In this way, the second pressure zone is flush with the flank of the control body and therefore - for the actuation of the actuator when the cyclist grips the handlebar with a low grip - no displacement of the thumb away from the flank of the control body is necessary: instead, a simple vertical movement of the thumb downwards is enough.

Preferably, the control comprises a plate, mounted on the control body, on which the actuator is mounted according to the longitudinal pivot axis, wherein the plate comprises a protective projection in front of the relief on the free face of the actuator, the protective projection and the relief having substantially equal respective heights, when the actuator is not pressed.

The presence of the protective projection prevents the cyclist from the risk of unintentional actuations of the actuator. In addition, the protective projection protects the actuator from impacts during the transport of the bicycle.

Preferably, the control comprises a further actuator, for sending a further electrical signal to said electronic device or to a further electronic device, mounted on or outside the bicycle. Optionally, the second electronic device is a gearshift and the further actuator is configured to send a shifting signal to the gearshift.

Preferably, the further actuator is a lever alongside the brake lever and pivoted to it according to a longitudinal pivot axis.

Preferably, the integrated control comprises an electronic board housed inside the control body and the switch is mounted on the electronic board.

Preferably, the electronic device is mounted on the bicycle, more preferably it is a gearshift and the electrical signal is a shifting signal.

Further characteristics and advantages of the invention will be more evident from the following description of a preferred embodiment thereof, made with reference to the appended drawings. In such drawings:
- fig. 1 is a schematic perspective view of a bicycle handlebar provided with two integrated controls according to the present invention, in particular a left integrated control and a right integrated control;
- fig. 2 is an exploded view of the left integrated control of fig. 1;
- fig. 3 is a side view of the left integrated control of fig. 1;
- fig. 4 is a view of the support plate of the actuator of the left integrated control of fig. 1;
- fig. 5 is a view of the actuator of the left integrated control of fig. 1;
- figs. 6 to 11 are schematic views of the actuator of the left integrated control of fig. 1, with some section planes highlighted;
- figs. 12 and 13 are schematic views of the right integrated control of fig. 1, gripped by a cyclist according to two different grips, respectively high and low.

In the figures, **M** indicates a bicycle handlebar, in particular a handlebar with curved ends, which comprises a transverse central portion **C** and two symmetrical ends, left and right; each end comprises an upper section **S** followed by a curved front section **R,** facing downwards.

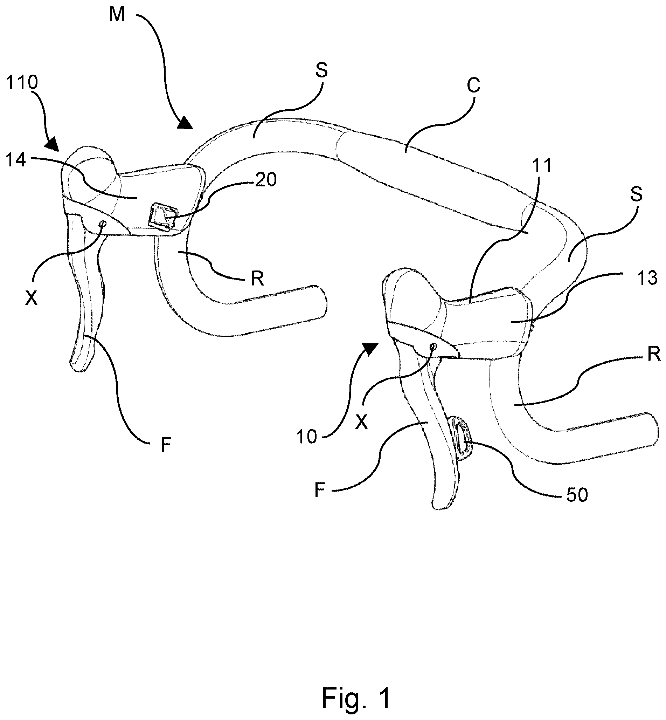

In fig. 1, two integrated controls are shown mounted on the handlebar M, in particular a left integrated control **10** and a right integrated control **110.**

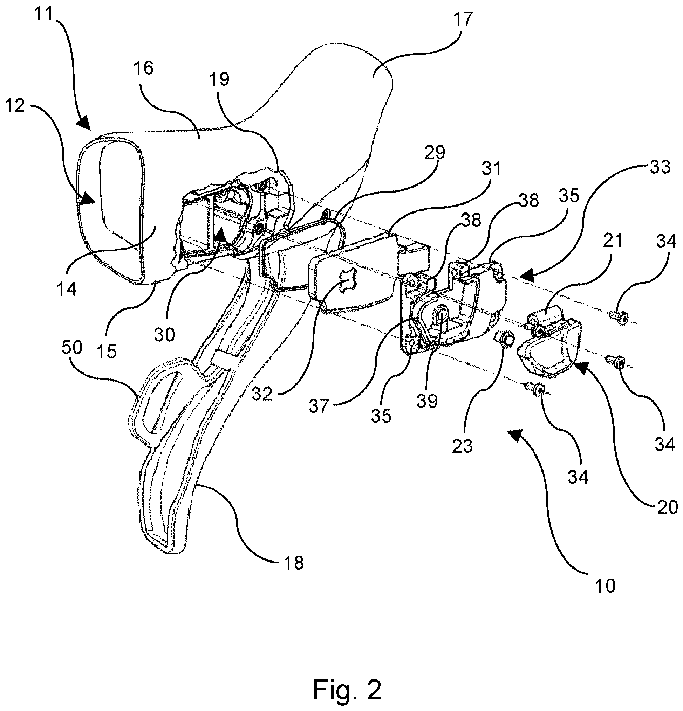

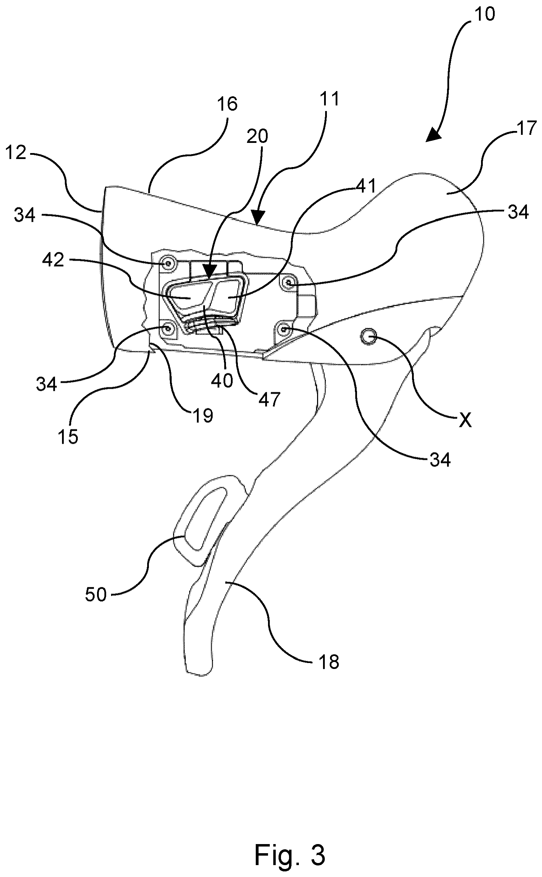

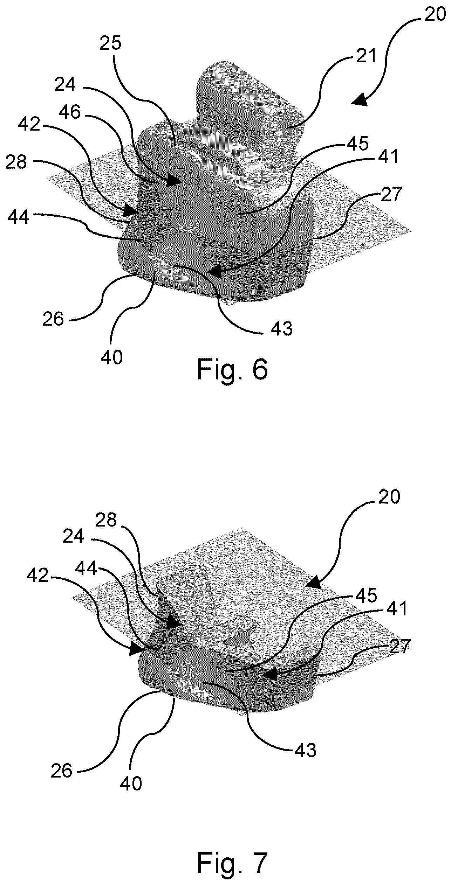

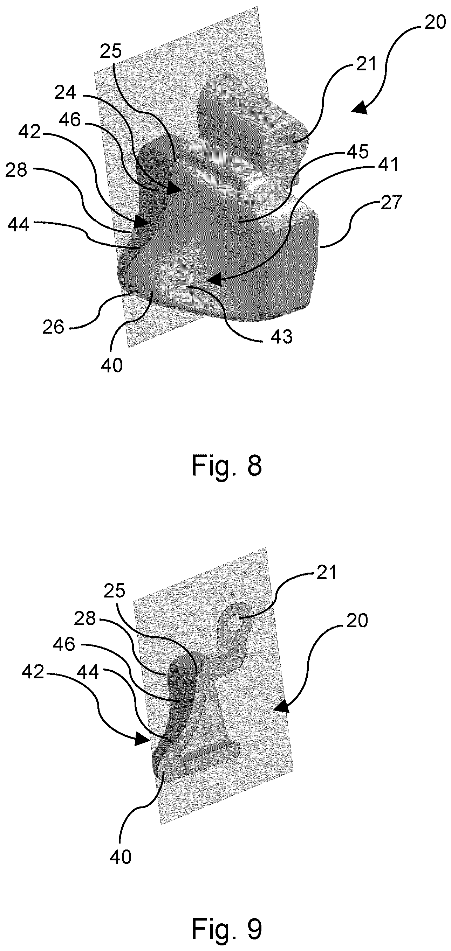

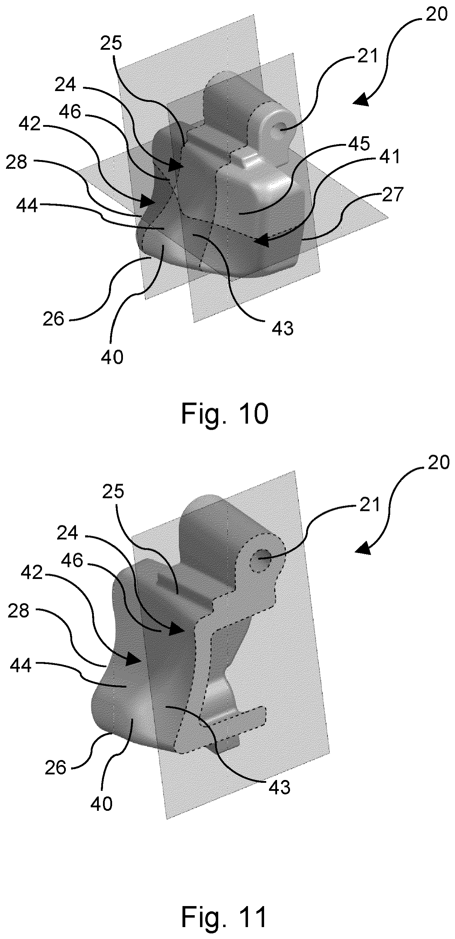

In figs. 2 to 12, the left integrated control 10 is shown, mounted on the left curved section R of the handlebar M; in the following, this left integrated control 10 will be described, it being understood that the corresponding right integrated control 110 (not described in detail and illustrated in figs. 1, 12 and 13 only) is identically symmetrical to the control 10 and is mounted on the right curved section R of the handlebar M.

The control 10 comprises a control body **11** provided with a rear abutment zone **12,** an outer flank **13** and an inner flank **14.** A lower side **15,** an upper side **16** as well as a front end **17,** which can be very pronounced forwards and upwards, are then defined on the control body 11. The abutment zone 12 is forced to rest against the curved section R of the handlebar M when the control 10 is mounted on the handlebar M. For fixing the control body 11 to the handlebar M, conventional means, not illustrated or described, are provided.

The control 10 comprises a brake lever **18,** extending downwards from the lower side 15 of the control body 11 and pivoted to the control body 10 according to a pivot axis **X,** transverse to the control body 10. The pivot axis X is located in a front zone of the control body 11, i.e. it is longitudinally spaced from the abutment zone 12.

The control body 11 preferably comprises a coating sheath **19,** to favour a comfortable and safe grip by the cyclist; in figs. 1 and 2 the sheath 19 has been partially removed, to better show the control body 11.

The control 10 further comprises an actuator **20,** of approximately rounded quadrangular shape. The actuator 20 is placed on the inner flank 14 of the control body 11, between the rear abutment zone 12 and the transverse pivot axis X; preferably, the actuator 20 is closer to the rear abutment zone 12 than to the transverse pivot axis X. The sheath 19 is interrupted at the actuator 20, to allow easy actuation.

The actuator 20 is pivoted to the control body 11 according to a longitudinal pivot axis **Y,** located high with respect to the actuator 20.

The control body 11 comprises a cavity **30** therein, which is open on the inner flank 14 at the actuator 20. In the cavity 30, a switch **32** is housed facing the actuator 20 for sending an electrical signal, also called control signal, to an electronic device placed on or outside the bicycle (smartphone, tablet, computer, cyclocomputer, etc.). A pressure on the switch 32 causes the closure of a circuit and the transmission of an electrical pulse to an electronic board **31,** optionally housed in the cavity 30. The electronic board 31 processes the electrical pulse and generates an electrical signal to be transmitted to the electronic device. In an example, the pressure exerted on the switch 32 causes an electrical shifting signal to be sent to the gearshift (not illustrated) of the bicycle. The electronic board 31 is preferably incorporated, at least in part, in a polymeric coating that makes it waterproof.

A plate **33** is mounted, through fixing means, on the control body 11 so as to close the cavity 30. An example is shown in the figures in which four screws **34** fix the plate 33 to the control body 11; the screws 34 pass through four through holes **35** in the plate 33 and engage by screwing in four threaded holes **36** formed in the control body 11, around the cavity 30. It is clear to the person skilled in the art that the use of any fixing means, such as screws, bolts, glue or other adhesive materials, fall within the scope of the present invention.

The plate 33 also serves to support the actuator 20. To this end, on the outer side of the plate 33 with respect to the cavity 30, a perimeter seat **37** is formed to accommodate the actuator 20; this perimeter seat 37 has an approximately rounded quadrangular shape, complementary to the shape of the actuator 20, so as to accommodate it with play. Above the perimeter seat 37, the plate 33 is provided with two eyelets **38,** aligned according to the longitudinal pivot axis Y; correspondingly, the actuator 20 is provided above with a tubular seat **21,** longitudinally extended. A pin, not illustrated, inserted in the eyelets 38 and in the tubular seat 21 ensures that the actuator 20 is pivoted to the plate 33 (and consequently indirectly also to the control body 11) according to the longitudinal pivot axis Y, so that the actuator 20 can be movable angularly.

A through hole **39** is formed in the plate 33, in a position corresponding to the position of the switch 32 arranged in the cavity 30 of the control 11 or, when present, on the electronic board 31. A pusher **23,** in contact with the actuator 20 and with the switch 32, is slidably mounted in the through hole 39.

The actuator 20 is free to shift angularly by a few degrees, sufficient to ensure that - when the actuator 20 is pressed - a central zone of the actuator 20 shifts transversely inwards with respect to the control body 11 and presses the pusher 23 against the switch 32, thus obtaining the sending of the electrical signal to the electronic device.

A gasket **29** ensures the sealed closure of the cavity 30. If the electronic board 31 is waterproof, the gasket 29 can be interposed between the electronic board 31 itself and the control body 11, as suggested in figure 2; otherwise, the gasket can be interposed between the plate 33 and the control body 11.

The actuator 20 comprises a free face **24** extending from an upper edge **25** at the longitudinal pivot axis Y to a lower edge **26** facing downwards, and from a front edge **27** to a rear edge **28.** The free face 24 comprises a relief **40** at a longitudinally intermediate zone of the lower edge 26.

On the free face 24 of the actuator 20, a first pressure zone **41** and a second pressure zone **42** are formed, oriented differently, so as to facilitate the actuation of the actuator 20 by a thumb of a cyclist when he/she grips the handlebar M in two different positions.

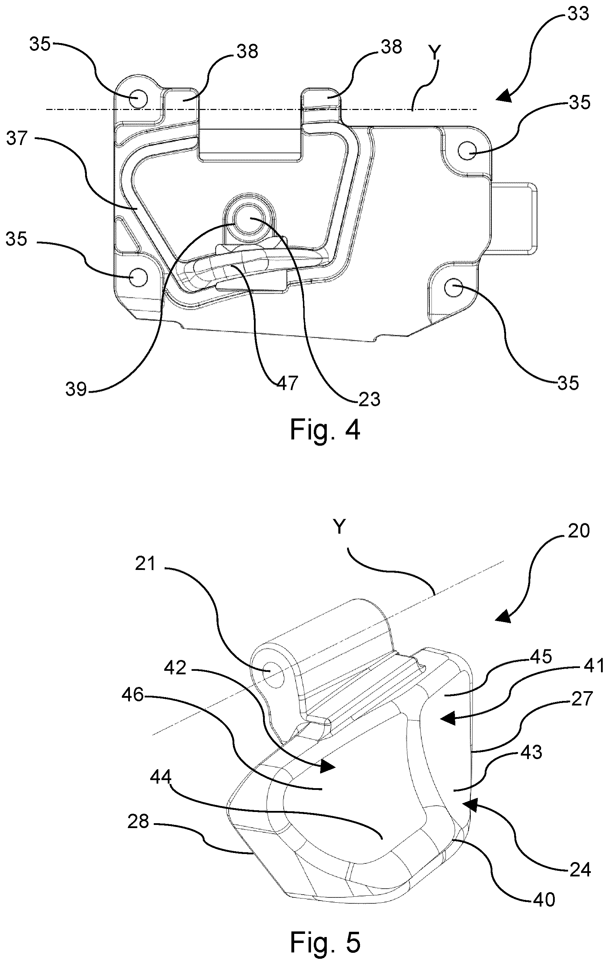

The first pressure zone 41 comprises a first flank **43** of the relief 40, facing forwards and upwards, and a first front flat zone **45** of the free face 24, at the upper edge 25 and at the front edge 27 of the actuator 20. The first flank 43 and the first flat zone 45 are flush with each other, as is visible in figures 4 to 11.

The second pressure zone 42 comprises a second flank **44** of the relief 40, facing backwards and upwards, and a second rear flat zone **46** of the free face 24, at the upper edge 25 and at the rear edge 28 of the actuator 20. The second flank 44 and the second flat zone 46 are flush with each other, as is visible in figures 4 to 11.

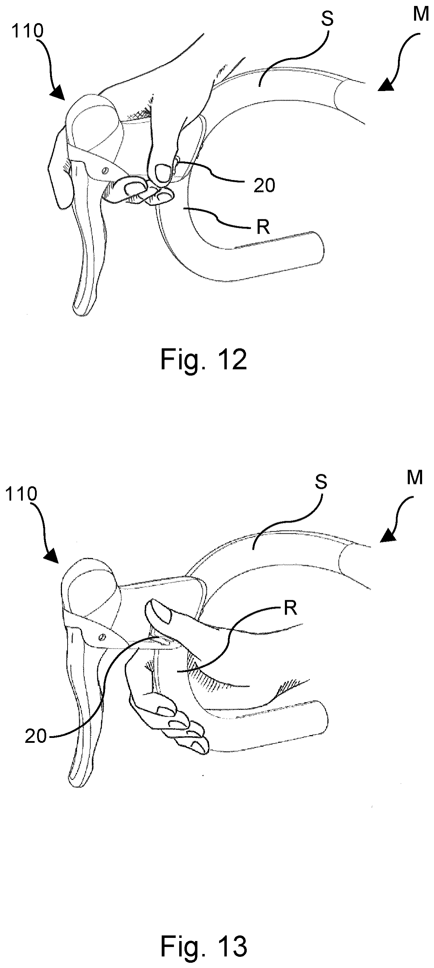

The first pressure zone 41 is oriented mainly forward upwards, so as to facilitate the actuation of the actuator 20 by a cyclist's thumb when he/she adopts a high grip, i.e. he/she grips the control body and possibly only partially touches the upper sections S of the handlebar M, as shown in fig. 12. With the high grip, in fact, the cyclist's thumb is able to move easily backward downwards, without the cyclist being forced to leave the grip.

The second pressure zone 42 is oriented mainly backward upwards, so as to facilitate the actuation of the actuator 20 by a cyclist's thumb when he/she adopts a low grip, i.e. he/she grips the handlebar M on the curved front sections R, as shown in fig. 13. With the low grip, in fact, the cyclist's thumb is able to move easily forward downwards, without the cyclist being forced to leave the grip.

In other words, the first pressure zone 41 and the second pressure zone 42 are oriented so as to facilitate, during operation, i.e. when the cyclist is riding the bicycle, the thumb to reach the actuator 20 respectively from a first direction and from a second direction, which are distinct from each other. The first direction corresponds to a mainly vertical direction, i.e. when the cyclist grips the control body 11 (high grip), while the second direction corresponds to a mainly horizontal direction, i.e. when the cyclist grips the handlebar M on the curved front sections R (low grip).

The free face 24 of the actuator 20 protrudes with respect to the inner flank 14 of the control body 11, both at the upper edge 25, and at the front edge 27, and at the rear edge 28 of the free face 24 of the actuator 20. If the control body 11 comprises the sheath 19, coplanarity is of course referred to the surface of the sheath 19.

In one example, the free face 24 of the actuator 20 protrudes with respect to the inner flank 14 of the control body 11 only at the front edge 27 and at a front portion of the upper edge 25 of the free face 24 between the front edge 27 and the relief 40, while it is coplanar with the control body 11 at the rear edge 28 and at a rear portion of the upper edge 25 of the free face 24 between the rear edge 28 and the relief 40. In this way, the cyclist who grips the handlebar M with a high grip can identify the actuator 20 to the touch alone without having to turn his/her gaze away from the road. If the control body 11 comprises the sheath 19, the projection or the possible coplanarity is obviously referred to the outer surface of the sheath 19.

The plate 33 comprises a protective projection **47** in front of the relief 40 on the free face 24 of the actuator 20. The protective projection 47 and the relief 40 have substantially equal respective heights, when the actuator 20 is not pressed.

The integrated control 10 further comprises a further actuator **50,** for sending a further electrical signal to a further electronic device placed on or outside the bicycle (smartphone, tablet, computer, cyclocomputer). In one example, the further actuator 50 is configured to send to the gearshift of the bicycle a shifting signal, optionally different from the shifting signal sent by the actuator 20. The further actuator 50 is - for example, according to a construction mode known per se - a lever flanked to the brake lever 18 and pivoted to it according to a longitudinal pivot axis, parallel to the axis Y. The two shifting signals that are sent by the actuator 20 and by the further actuator 50 are typically an upshifting signal and a downshifting signal.

The electronic device and the further electronic device may be the same device or two different devices, mounted on or outside the bicycle; the electrical signal and the further electrical signal may be the same electrical signal, i.e. an electrical signal directed to the same electronic device to obtain the same functionality, or two different electrical signals for the same electronic device or for two different electronic devices.

The integrated control 10 is particularly advantageous for the cyclist. The difference in height between the control body 11, or the sheath 19, and the actuator 20 along its upper 25, front 27 and rear 28 edges, as explained above, facilitates the identification of the actuator 20 by using only the thumb without having to visually look for the actuator, when it is wished to send an electrical signal to the electronic device of the bicycle or external to it through the actuator 20. In particular, the thumb can slide on the inner flank 14 of the control body 11 and identify the actuator 20 to the touch, without therefore forcing the cyclist to check the position of the actuator 20 by turning his/her gaze away from the road.

The possible coplanarity between the control body 11, or the sheath 19, and the actuator 20 along its rear edges 28 and, partially, upper edges 25, as explained above, facilitates the movements of the thumb of the cyclist, when he/she wants to send an electrical signal to the electronic device via the actuator 20. In particular, when the cyclist grips the handlebar M with the low grip, the thumb can slide on the inner flank 14 of the control body 11, without having to detach from it and without therefore forcing the cyclist to alter the grip on the handlebar M.

Regardless of the grip, high or low, held by the cyclist, the actuator 20 is sized and shaped so that the thumb of the cyclist can then pass from contact with the control body 11 to contact with one of the two pressure zones 41 or 42 simply by sliding on the control body 11 itself without ever having to lift from it. Once the pressure zone 41 or 42 is reached, a further push of the thumb causes the angular displacement of the actuator 20; due to this, the actuator 20 pushes the pusher 23 which presses the switch 32 of the electronic board 31, causing the electrical signal to be sent to the electronic device.

The protective projection 47 prevents the integrated control 10 from being damaged due to accidental impacts on the actuator 20, for example during transport of the bicycle. Furthermore, the protective projection 47 helps the cyclist to avoid unintentional actuations of the actuator 20, giving him/her an immediately recognizable tactile reference, without the need to distract him-herself by turning his/her gaze away from riding.

It should also be noted that, when present, the electronic board 31 is well protected from water or dirt inside the cavity 30, since it is closed sealingly by the plate 33 with the relative gasket 29.

## Claims

1. Integrated control for a gearshift and a brake of a bicycle provided with a handlebar (M) of the curved end type, wherein each end comprises an upper section (S) and a curved front section (R), facing downwards with respect to the upper section (S), the integrated control comprising:
- a control body(11),
- a rear abutment zone (12) of the control body (11), intended to be in contact with the handlebar (M) when the control is mounted on the handlebar (M),
- a brake lever (18) pivoted to the control body (11) according to a pivot axis (X) transverse to the control body (11), spaced from the rear abutment zone (12),
- a switch (32) for sending an electrical signal to an electronic device,
- an actuator (20) placed on a flank (14) of the control body (11), between the rear abutment zone (12) and the transverse pivot axis (X), mounted movable angularly on the control body (11) so as to be able to transfer a pressure to the switch (32),
**characterized in that**
the actuator (20) comprises two distinct pressure zones (41, 42), oriented differently, so as to allow the actuation of the actuator (20) by a thumb of a cyclist who, during operation, reaches the actuator (20) respectively from a first direction and from a second direction which are distinct from each other.

2. Integrated control according to claim 1, wherein the first direction corresponds to a mainly vertical direction, when the cyclist grips the control body (11), and wherein the second direction corresponds to a mainly horizontal direction, when the cyclist grips the handlebar (M) on the curved front sections (R).

3. Integrated control according to claim 2, wherein the actuator (20) is pivoted to the control body (11) according to a longitudinal pivot axis (Y), located high with respect to the actuator (20), and wherein a first pressure zone (41) is oriented mainly forward upwards.

4. Integrated control according to claim 2, wherein the actuator (20) is pivoted to the control body (11) according to a longitudinal pivot axis (Y), located high with respect to the actuator (20), and wherein a second pressure zone (42) is oriented mainly backward upwards.

5. Integrated control according to claim 2, wherein the actuator (20) is pivoted to the control body (11) according to a longitudinal pivot axis (Y), located high with respect to the actuator (20), wherein a first pressure zone (41) is oriented mainly forward upwards, and wherein a second pressure zone (42) is oriented mainly backward upwards.

6. Integrated control according to claim 5, wherein the actuator (20) comprises a free face (24) extending from an upper edge (25) at the longitudinal pivot axis (Y) to a lower edge (26) facing downwards, wherein the free face (24) comprises a relief (40) at a longitudinally intermediate zone of the lower edge (26), and wherein the first pressure zone (41) comprises a first flank (43) of the relief (40) and the second pressure zone (42) comprises a second flank (44) of the relief (40).

7. Integrated control according to claim 6, wherein the free face (24) of the actuator (20) protrudes with respect to the inner flank (14) of the control body (11) at a front edge (27) and at a front portion of an upper edge (25) of the free face (24) of the actuator (20) between the front edge (25) and the relief (40), and wherein
the free face (24) of the actuator (20) is coplanar with the inner flank (14) of the control body (11) at a rear edge (28) and at a rear portion of the upper edge (25) of the free face (24) of the actuator (20) between the rear edge (28) and the relief (40).

8. Integrated control according to claim 6, wherein the first pressure zone (41) also comprises a front first flat zone (45) of the free face (24) of the actuator (20), flush with the first flank (43) of the relief (40), and wherein the second pressure zone (42) also comprises a rear second flat zone (46) of the free face (24) of the actuator (20), flush to the second flank (44) of the relief (40).

9. Integrated control according to claim 6, comprising a plate (33), mounted on the control body (11), on which the actuator (20) is mounted according to the longitudinal pivot axis (Y), wherein the plate (33) comprises a protective projection (47) in front of the relief (40) on the free face (24) of the actuator (20), the protective projection (47) and the relief (40) having substantially equal respective heights, when the actuator (20) is not pressed.

10. Integrated control according to any of the preceding claims, comprising a further actuator (50), for sending a further electrical signal to said electronic device or to a further electronic device.

11. Integrated control according to claim 9, wherein the further actuator (50) is a lever alongside the brake lever (18) and pivoted to it according to a longitudinal pivot axis.

12. Integrated control according to any of the preceding claims, comprising an electronic board (32) housed inside the control body (11), wherein the switch (32) is mounted on the electronic board (32).

13. Integrated control according to any of the preceding claims, wherein the electronic device is mounted on the bicycle.

14. Integrated control according to claim 12, wherein the electronic device is a gearshift and the electrical signal is a shifting signal.
